# EUROPEAN PATENT APPLICATION

(11) **EP 4 109 156 A1**
(43) Date of publication of application: **28.12.2022**
(21) Application number: 21764246.1
(22) Date of filing: 08.03.2021
(51) Int. Cl.: G02B 6/42, H04B 10/50

(54) **LIGHT SOURCE MODULE, OPTICAL COMMUNICATION SINGLE BOARD, AND OPTICAL COMMUNICATION SYSTEM**

(30) Priority: 06.03.2020 CN 202010150668
(71) Applicant: Huawei Technologies Co., Ltd., Shenzhen, Guangdong 518129, (CN)
(72) Inventor: YU, Fei, Shenzhen, Guangdong 518129 (CN); SONG, Xiaolu, Shenzhen, Guangdong 518129 (CN); CHEN, Jun, Shenzhen, Guangdong 518129 (CN); XU, Benbo, Shenzhen, Guangdong 518129 (CN)
(74) Representative: Gill Jennings & Every LLP
(86) International application number: PCT/CN2021/079586
(87) International publication number: WO 2021/175332

(57) **Abstract**

This application provides a light source module, an optical communications board, and an optical communications system. The light source module includes a light source emission module configured to emit a laser and a housing configured to protect the light source emission module. The light source emission module is connected to a first connector and a second connector, the first connector is an optical signal connector, and the second connector is an electrical signal connector. When the first connector and the second connector are specifically disposed, the first connector and the second connector are located on a same side of the housing. In addition, both the first connector and the second connector are pluggable connectors. When being connected to a backplane, the first connector and the second connector may be separately connected to a board body in a pluggable manner. In the foregoing technical solution, the first connector and the second connector are disposed in a pluggable manner, which helps remove the light source module from the board body, thereby facilitating replacement and maintenance of the light source module.

## Description

### TECHNICAL FIELD

This application relates to the field of communications technologies, and in particular, to a light source module, an optical communications board, and an optical communications system.

### BACKGROUND

A laser is centralized in a light source module, and the light source module is optically connected to an OBO (On Board Optics) component. A main signal flow direction is as follows: The light source module emits light to the OBO component, and after modulating the light of the OBO component, an ASIC outputs modulated light to an optical connector. A reverse direction is as follows: An optical signal passes through the optical connector from the outside and is optically connected to the OBO component to be converted into an electrical signal, and then the electrical signal is electrically connected to the ASIC.

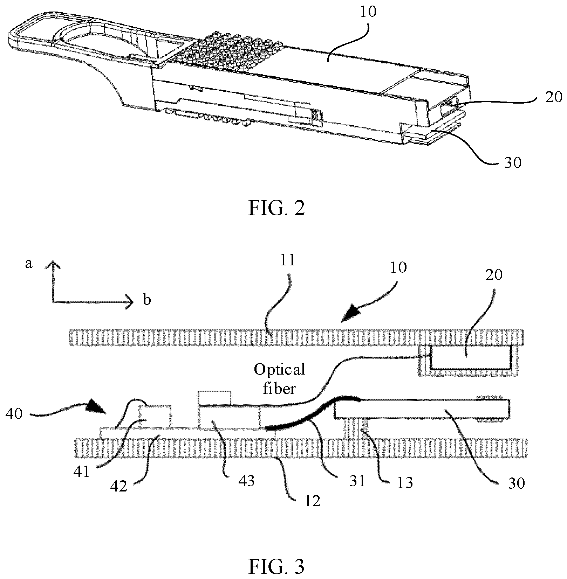

In FIG. 3, a dotted line is optical connection, and a solid line is electrical connection.

### SUMMARY

This application provides a light source module, an optical communications board, and an optical communications system, to facilitate installation and maintenance of a light source module.

According to a first aspect, a light source module is provided, where the light source module is applied to an optical communications system. The light source module includes a light source emission module configured to emit a laser and a housing configured to protect the light source emission module. The light source emission module is connected to a first connector and a second connector, the first connector is an optical signal connector, and the second connector is an electrical signal connector. When the first connector and the second connector are specifically disposed, the first connector and the second connector are located on a same side of the housing. In addition, both the first connector and the second connector are pluggable connectors. When being connected to a backplane, the first connector and the second connector may be separately connected to a board body in a pluggable manner. In the foregoing technical solution, the first connector and the second connector are disposed in a pluggable manner, which helps remove the light source module from the board body, thereby facilitating replacement and maintenance of the light source module.

In a specific implementable solution, the first connector and the second connector may be connected in different manners, for example, the first connector and the second connector are stacked, or the first connector and the second connector may be disposed side by side. The first connector and the second connector are disposed in different manners.

In a specific implementable solution, the first connector is a multi-channel standard pluggable optical connector or an LC/FC connector, and may be different types of connectors.

In a specific implementable solution, the second connector is a gold finger connector or a plug connector, and may be different types of connectors.

In a specific implementable solution, the first connector and the second connector are disposed in a staggered manner, to adapt to a structure on the board body.

According to a second aspect, an optical communications board is provided. The optical communications board includes a board body and an adapter fastened at an edge of the board body, and the adapter includes a third connector connected to a first connector in a pluggable manner, and a fourth connector connected to a second connector in a pluggable manner. The adapter is disposed at an edge of a backplane to facilitate plugging and unplugging of the light source module.

In a specific implementable solution, the third connector and the fourth connector may be arranged in different manners, for example, the third connector and the fourth connector are disposed side by side, or the third connector and the fourth connector are stacked.

In a specific implementable solution, the third connector and the fourth connector share one housing, to facilitate disposing.

In a specific implementable solution, a positioning post is disposed on the housing, and a corresponding positioning hole is disposed on the board body, to facilitate disposing.

According to a third aspect, an optical communications system is provided. The optical communications system includes the light source module according to any of the foregoing solutions and the foregoing optical communications board, and the light source module is connected to the optical communications board in a pluggable manner. In the foregoing technical solution, the first connector and the second connector are disposed in a pluggable manner, which helps remove the light source module from the board body, thereby facilitating replacement and maintenance of the light source module.

In a specific implementable solution, the optical communications system further includes an optical connector, and the optical connector is connected to the board body in a pluggable manner. The optical connector and the light source module are located on a same side of the board body, to facilitate plugging and unplugging.

### DESCRIPTION OF DRAWINGS

FIG. 1 is a schematic diagram of an application scenario of a light source module;
FIG. 2 is a schematic diagram of a structure of a light source module according to an embodiment of this application;
FIG. 3 is a schematic diagram of an internal structure of a light source module according to an embodiment of this application;
FIG. 4a to FIG. 4c are schematic diagrams of assembly of a first connector and a housing;
FIG. 5 is a schematic diagram of a structure of a second light source module according to an embodiment of this application;
FIG. 6 is a schematic diagram of a structure of a third light source module according to an embodiment of this application;
FIG. 7 shows an optical communications board according to an embodiment of this application;
FIG. 8 is a schematic diagram of a specific structure of an adapter according to an embodiment of this application;
FIG. 9 is a schematic diagram of connection between a fourth connector and a backplane;
FIG. 10 is a schematic diagram of a structure of a second adapter according to an embodiment of this application;
FIG. 11 is a schematic diagram of connection between a light source module and an adapter according to an embodiment of this application;
FIG. 12 is a schematic diagram of an internal structure when a fourth connector cooperates with a second connector; and
FIG. 13 is a schematic diagram of a structure of an optical communications system according to an embodiment of this application.

### DESCRIPTION OF EMBODIMENTS

To make the objectives, technical solutions, and advantages of this application clearer, the following further describes this application in detail with reference to the accompanying drawings.

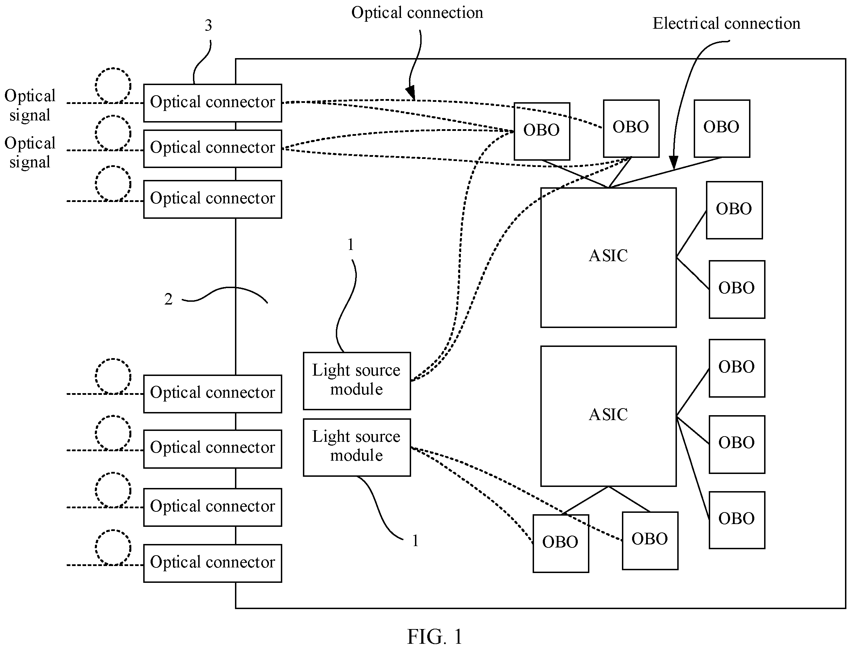

To facilitate understanding of a light source module provided in the embodiments of this application, an application scenario of the light source module provided in the embodiments of this application is first described. The light source module provided in the embodiments of this application is applied to an optical communications system, and the optical communications system may be a communications system such as a router or a switch. As shown in FIG. 1, in a schematic diagram in which a light source module is applied to an optical communications system, a laser is centralized in a light source module 1, and the light source module 1 is optically connected to an OBO (On Board Optics, on board optics) component. A main signal flow direction is as follows: The light source module 1 emits light to the OBO component, and after modulating the light of the OBO component, an ASIC (Application-specific integrated circuit, application-specific integrated circuit) outputs modulated light to an optical connector 3. A reverse direction is as follows: An optical signal passes through the optical connector 3 and the OBO component to be converted into an electrical signal, and then the electrical signal is electrically connected to the ASIC. In FIG. 1, a dotted line represents optical connection, and a solid line represents electrical connection. When the foregoing structure is used, because the light source module 1 is disposed on a backplane 2, so that when the light source module 1 needs to be maintained, the entire backplane 2 needs to be removed for replacement or maintenance, which causes relatively high labor force for maintenance or replacement. Therefore, the embodiments of this application provide a light source module 1, which is described below in detail with reference to specific accompanying drawings and embodiments.

FIG. 2 is a schematic diagram of a structure of a light source module according to an embodiment of this application. The light source module provided in this embodiment of this application includes a housing 10 and a light source emission module. The light source emission module is fastened in the housing 10, and therefore is not shown in FIG. 2. The housing 10 serves as a protection structure of the light source emission module. The light source module further includes a first connector 20 and a second connector 30, and the first connector 20 and the second connector 30 are separately connected to the light source emission module. The first connector 20 and the second connector 30 are fastened in the housing 10, and the first connector 20 and the second connector 30 are disposed on a same side of the housing 10.

FIG. 3 is a schematic diagram of an internal structure of a light source module according to an embodiment of this application. The housing 10 includes a low plate 12 and an upper housing 11. The upper housing 11 and the low plate 12 form space used to accommodate the light source emission module 40. The upper housing 11 may be fixedly connected to the low plate 12 by using a screw or a bolt, or the upper housing 11 may be connected to the low plate 12 through buckling, bonding, welding, or the like, or the upper housing 11 may be fixedly connected to the low plate 12 in an integrated manner.

Still referring to FIG. 3, the light source emission module 40 includes a circuit board 42 fastened on the low plate 12, a laser emitter that is disposed on the circuit board 42 and electrically connected to the circuit board 42, and an optical path adjustment component 43 such as a lens or a filter that is fastened on the circuit board 42 and configured to adjust the laser emitter.

The first connector 20 is an optical signal connector, and the first connector 20 is connected to the optical path adjustment component 43 by using an optical fiber. Light emitted from the laser emitter 41 is transmitted to the first connector 20 by using the optical path adjustment component 43. The first connector 20 may be connected to an external optical path of the light source module, to propagate an optical signal. In this embodiment of this application, the first connector 20 may be different types of optical connectors. For example, the first connector 20 is a multi-channel standard pluggable optical connector or an LC/FC connector. A connection end of the first connector 20 faces the outside of the housing 10, so that the connection end of the first connector 20 can be connected to the external optical path.

Still referring to FIG. 3, the second connector 30 is an electrical signal connector, and the second connector 30 is electrically connected to the circuit board 42 of the light source emission module 40 by using a cable 31 or a metallic wire. The second connector 30 may be connected to an external power supply circuit of the light source module. In this embodiment of this application, the second connector 30 may use different types of electrical connectors. For example, the second connector 30 may be a gold finger connector or a plug connector. When the second connector 30 is fastened, the second connector 30 is fixedly connected to the low plate 12. Optionally, a support protrusion is disposed on the low plate 12, and the second connector 30 is fastened on the support protrusion. Certainly, the second connector 30 may be directly fixedly connected to the low plate 12. A connection end of the second connector 30 faces the outside of the housing 10, so that the connection end of the second connector 30 can be connected to the external power supply circuit.

For ease of description, a direction a and a direction b are defined, a surface of the light source emission module 40 is disposed perpendicular to the low plate 12 in the direction a, and the direction b is perpendicular to the direction a. When the first connector 20 and the second connector 30 are specifically disposed, the first connector 20 and the second connector 30 are stacked in the direction a, and the first connector 20 is flush with the second connector 30 in the housing 10. "Flush" means that the connection end of the first connector 20 is flush with or approximately flush with the connection end of the second connector 30, and "approximately flush" means that a deviation falls within an allowed assembly error range.

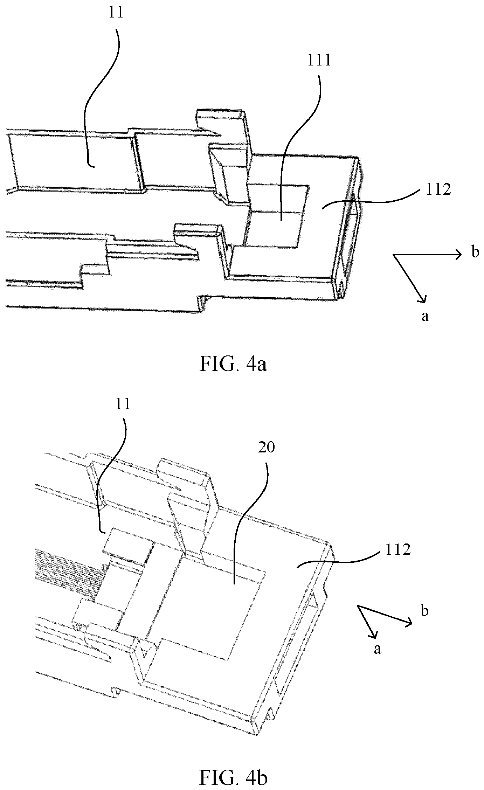

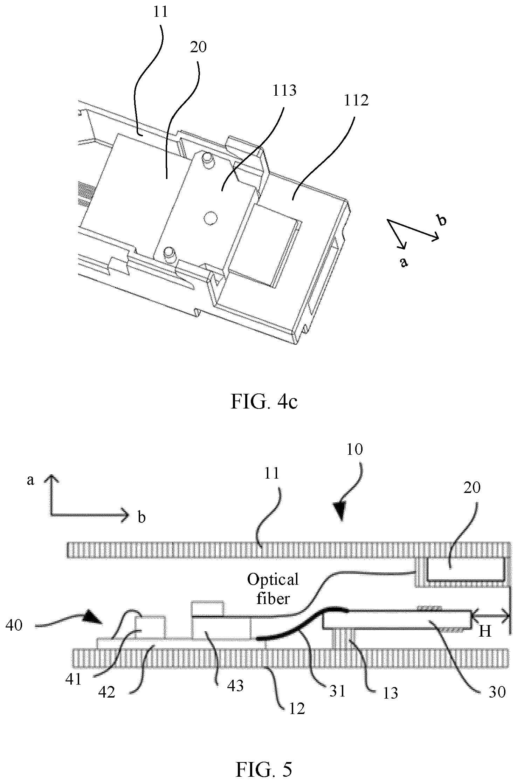

FIG. 4a to FIG. 4c are schematic diagrams of a procedure for fastening the first connector 20 in the housing 10. As shown in FIG. 4a, a rib 112 is disposed on the upper housing 11, and the rib 112 and a sidewall of the upper housing 11 form an accommodation cavity 111 that accommodates the first connector 20. For openings at two ends of the accommodation cavity 111 in the direction b, the end facing the inside of the upper housing 11 is an insertion end of the first connector 20, and the end facing the outside of the upper housing 11 is configured to communicate with outer space of the housing 10, so that the connection end of the first connector 20 can be exposed outside the upper housing 11. As shown in FIG. 4b, the first connector 20 is inserted into the accommodation cavity 111 in the direction b from the inside of the upper housing 11, and the connection end of the first connector 20 faces the direction b. As shown in FIG. 4c, the upper housing 11 further includes a fastening board 113. The fastening board 113 covers the first connector 20 and is fixedly connected to the upper housing 11 by using a bolt or a screw, to fasten the first connector 20 in the accommodation cavity 111.

FIG. 5 is a schematic diagram of a structure of a second light source module according to an embodiment of this application. For reference numerals in FIG. 5, refer to the same reference numerals in FIG. 3. A difference between the light source module shown in FIG. 5 and the light source module shown in FIG. 3 lies in that the first connector 20 and the second connector 30 of the light source module in FIG. 5 are disposed in a staggered manner. In the direction b, the connection end of the first connector 20 is closer to the outside of the housing 10, and the connection end of the second connector 30 is closer to the inside of the housing 10. A distance between the connection end of the first connector 20 and the connection end of the second connector 30 is H in the direction b, and a specific value of H may be limited based on a requirement. Certainly, the connection end of the first connector 20 may be closer to the inside of the housing 10, and the connection end of the second connector 30 may be closer to the outside of the housing 10. The first connector 20 and the second connector 30 are disposed in a staggered manner, to adapt to a manner of disposing an adapter on an optical communications board.

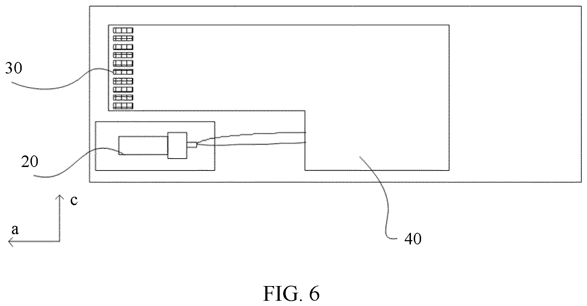

FIG. 6 is a schematic diagram of a structure of a third light source module according to an embodiment of this application. For reference numerals in FIG. 6, refer to the same reference numerals in FIG. 3. For ease of description, a direction c is defined, and the direction b, the direction b, and the direction c are perpendicular to each other. A difference between the light source module shown in FIG. 6 and the light source module shown in FIG. 3 lies in that the first connector 20 and the second connector 30 are disposed side by side. For example, the first connector 20 and the second connector 30 are disposed side by side in the direction c. Through comparison with the light source module shown in FIG. 3 or FIG. 5, it may be found that when the first connector 20 and the second connector 30 are disposed side by side, a height of the light source module in the direction a is decreased, and a width of the light source module in the direction c is increased. When the light source modules shown in FIG. 3 and FIG. 6 are inserted into an optical communications board, an adapter on the optical communications board may be disposed based on a manner of arranging the first connector 20 and the second connector 30, so that the adapter can be properly disposed based on space of the optical communications board, to reduce impact of the added adapter on application space of the optical communications board.

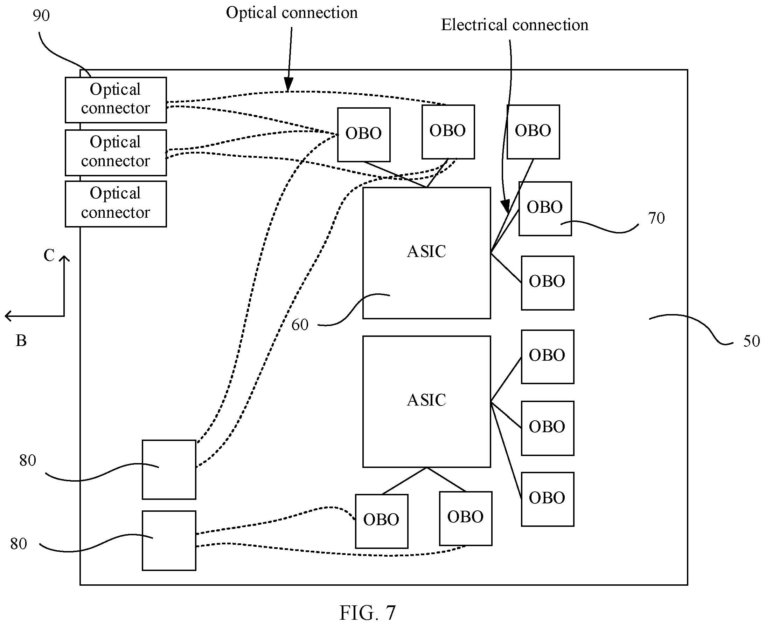

FIG. 7 shows an optical communications board according to an embodiment of this application. For ease of description, a direction B and a direction C are defined. The direction B is perpendicular to the direction C, the direction C is parallel to one side of the optical communications board, and the direction B points to the outside of the optical communications board. The optical communications board includes a board body 50. The board body 50 is configured to carry various electrical components and optical components and is configured to supply power to the electrical components and the optical components. The board body 50 may be a printed circuit board or another common circuit board in the conventional technology. This is not specifically limited herein. An on board optics component 70 and an application-specific integrated circuit 60 are disposed on the board body 50, and disposing locations of the on board optics component 70 and the application-specific integrated circuit 60 may be set based on a requirement. This is not specifically limited in this embodiment of this application. The on board optics component 70 and the application-specific integrated circuit 60 may be electrically connected to the board body 50 in a known connection manner. The optical communications board further includes an adapter 80 and an optical connector 90 that are fastened at an edge of the board body 50. The optical connector 90 and the adapter 80 are connected to the on board optics component 70 by using an optical signal through an optical fiber, and the on board optics component 70 is electrically connected to the application-specific integrated circuit 60 by using a wire. In FIG. 7, a dotted line represents optical connection, and a solid line represents electrical connection. A connection end of the adapter 80 faces the outside of the board body 50. As shown by the direction B in FIG. 7, the connection end of the adapter 80 faces the direction B, to connect to a light source module in a pluggable manner.

In an optional solution, the optical connector 90 and the adapter 80 are disposed on a same side of the board body 50, so that the optical fiber connected to the optical connector 90 and the light source module connected to the adapter 80 can be plugged and unplugged on a same side, to facilitate removal. Although FIG. 7 shows three optical connectors 90 and two adapters 80, a quantity of optical connectors 90 and a quantity of adapters 80 are not specifically limited in this embodiment of this application, and the quantity of optical connectors 90 and the quantity of adapters 80 may be set based on a requirement. In addition, specific disposing locations of the adapter 80 and the optical connector 90 are also not limited. The three optical connectors 90 shown in FIG. 7 are located at an upper location (a placement direction of the board body 50 shown in FIG. 7 is used as a reference direction), and the two adapters 80 are disposed at a lower location, but this is only a specific example. In this embodiment of this application, the specific disposing locations of the optical connector 90 and the adapter 80 may be set based on a requirement. The circuit 60 of the board body 50 may also be adaptively changed to ensure that the adapter 80 can be electrically connected to the board body 50.

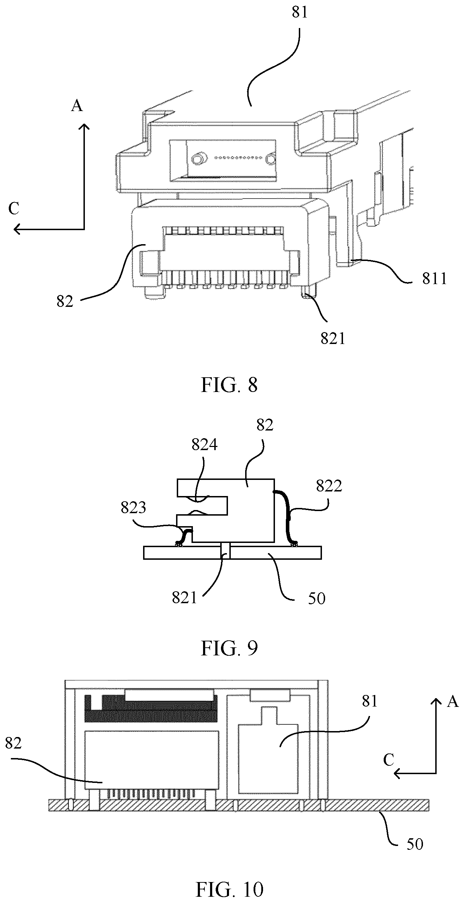

FIG. 8 is a schematic diagram of a specific structure of the adapter 80 according to an embodiment of this application. The adapter 80 shown in FIG. 8 includes a third connector 81 and a fourth connector 82. The third connector 81 is configured to connect to the first connector in a pluggable manner. When the first connector is an optical signal connector, the third connector 81 is an optical adapter 80. When the first connector is a multi-channel standard pluggable optical connector 90 or an LC/FC connector, the third connector 81 may be a corresponding optical adapter 80. A connection end that is of the third connector 81 and that faces the direction b may be connected to the first connector in a pluggable manner, and a connection end that is of the third connector 81 and that is away from the direction b may be used for plugging or unplugging of an optical fiber. The optical fiber is connected to the on board optics component 70.

The fourth connector 82 is configured to connect to the second connector in a pluggable manner. When the second connector is an electrical connector, the fourth connector 82 is also an electrical connector. For example, the second connector is a male connector, and the fourth connector 82 is a female connector; or the second connector is a female connector, and the fourth connector 82 is a male connector. When the second connector is a gold finger connector or a plug connector, the fourth connector 82 may be a corresponding connector connected to the second connector.

Still referring to FIG. 8, the third connector 81 and the fourth connector 82 use a separate structure. Certainly, the third connector 81 and the fourth connector 82 may use an integrated structure. When the integrated structure is used, the third connector 81 and the fourth connector 82 share one housing. In FIG. 8, for ease of description, a direction A is defined. The direction A is perpendicular to a surface that is of the board body 50 and on which the adapter 80 is disposed, and is also perpendicular to the direction B and the direction C. The third connector 81 and the fourth connector 82 are stacked in the direction A, where the fourth connector 82 is located at a lower location, and the third connector 81 is located above the fourth connector 82. Optionally, the third connector 81 may be located at an upper location, and the fourth connector 82 is located at an upper location. A manner of arranging the third connector 81 and the fourth connector 82 is not specifically limited in this application. However, the manner of arranging the third connector 81 and the fourth connector 82 of the adapter 80 should be the same as a manner of arranging corresponding optical modules, to ensure that the third connector 81 can be correspondingly connected to the first connector and that the second connector can be correspondingly connected to the fourth connector 82.

The third connector 81 is provided with at least two first positioning posts 811, and a positioning hole in cooperation with each first positioning post 811 is correspondingly disposed on the board body 50, to position the third connector 81. The fourth connector 82 is also provided with at least two second positioning posts 821, and a positioning hole in cooperation with each second positioning post 821 is correspondingly disposed on the board body 50, to position the fourth connector 81. When the third connector 81 and the fourth connector 82 share one housing, the positioning post is disposed only on the housing, and a corresponding positioning hole is disposed on the board body 50, which can fasten the adapter 80.

FIG. 9 is a schematic diagram of connection between the fourth connector 82 and the board body. A housing of the fourth connector 82 is connected to the ground of the board body 50 by using a connection line 823, and the second positioning post 821 of the fourth connector 82 is inserted into the positioning hole (not shown in the figure) of the board body 50 for fastening. A connection terminal 824 in the fourth connector 82 is electrically connected to the circuit on the board body 50 by using an electrical connector pin 822.

FIG. 10 shows a second type of adapter. For reference numerals in FIG. 10, refer to the same numerals in FIG. 8. A difference between the adapter shown in FIG. 10 and the adapter shown in FIG. 8 lies in only a change in a manner of arranging the third connector 81 and the fourth connector 82. The third connector 81 and the fourth connector 82 are disposed side by side. For example, the third connector 81 and the fourth connector 82 are disposed side by side in the direction C. When the third connector 81 and the fourth connector 82 are arranged side by side, it should be ensured that the third connector 81 and the fourth connector 82 can be correspondingly connected to the first connector and the second connector.

Through comparison with the adapter shown in FIG. 8, it may be found that when the third connector 81 and the fourth connector 82 are disposed side by side, a height of the optical communications board in the direction A is decreased, and a width of the optical communications board in the direction C is increased. In actual application, the manner of arranging the third connector 81 and the fourth connector 82 in the adapter may be properly set based on assembly space of the optical communications board.

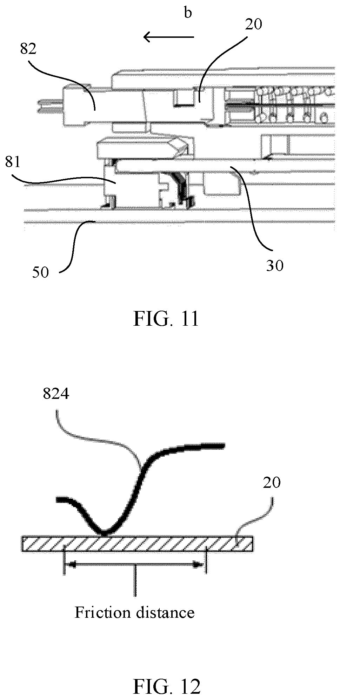

FIG. 11 is a schematic diagram of connection between a light source module and an adapter. For some reference numerals in FIG. 11, refer to the same reference numerals in FIG. 3 and FIG. 8. When the light source module is inserted into the adapter in the direction b, the first connector 20 is inserted into the adapter and is connected to a plug of an optical fiber connected to the third connector 81. The second connector 30 is inserted into the fourth connector 82 and is electrically connected to the fourth connector 82. In this way, electrical signal connection and optical signal connection between the light source module and the optical communications board are implemented. The first connector 20 and the second connector 30 are pluggable connectors. Therefore, when the light source module is faulty, the light source module can be directly unplugged. In addition, the adapter is disposed in an edge area of the board body, so that the light source module may use a plugging/unplugging manner the same as an optical connector in the conventional technology, and the light source module can be removed without removing the optical communications board, thereby facilitating replacement and maintenance of the light source module.

FIG. 12 is a schematic diagram of an internal structure when the fourth connector 82 cooperates with the second connector. To ensure electrical connection between the optical communications board and the light source module, the second connector has a specific insertion distance, to ensure sufficient contact between a connection terminal of the second connector 30 and the connection terminal 824 of the fourth connector 82. A friction distance in FIG. 12 is a contact distance between the second connector 30 and the connection terminal 824 when the second connector 20 is inserted into the fourth connector 82.

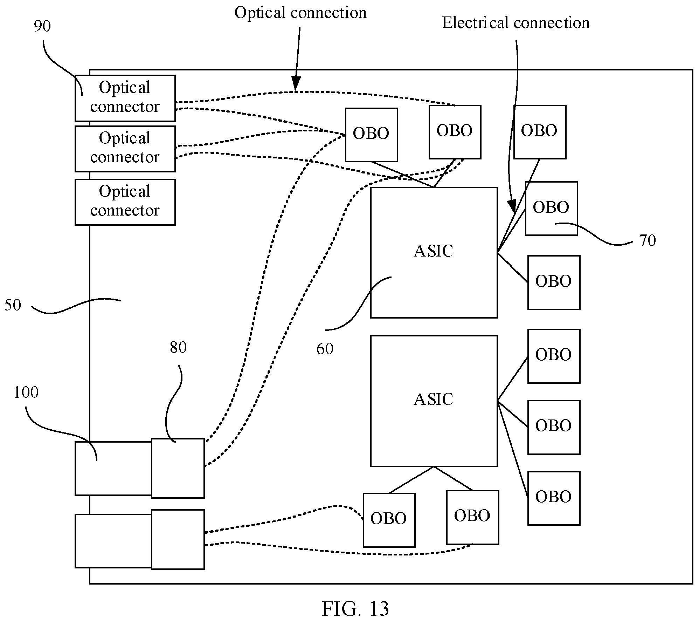

An embodiment of this application further provides an optical communications system, where the optical communications system may be a communications system such as a router or a switch. As shown in FIG. 13, in a schematic diagram in which a light source module is applied to an optical communications system, a laser is centralized in a light source module 100, and the light source module 100 is optically connected to the on board optics component 70. A main signal flow direction is as follows: The light source module 100 emits light to the on board optics component 70, and after modulating the light of the on board optics component 70, the application-specific integrated circuit 60 outputs the light to the optical connector 90. A reverse direction is as follows: An optical signal is converted into an electrical signal from the outside by using the optical connector 90 and the on board optics component 70, and then the electrical signal is electrically connected to the application-specific integrated circuit 60. In FIG. 13, a dotted line represents optical connection, and a solid line represents electrical connection. When the foregoing structure is used, the light source module 100 may be connected to the board body 50 in a pluggable manner by using the adapter 80. When the light source module 100 needs to be replaced, the entire board body 50 does not need to be removed to replace or maintain the light source module 100, which reduces difficulty of maintenance or replacement, and simplifies tedious maintenance steps.

Still referring to FIG. 13, the optical connector 90 and the light source module 100 are located on a same side of the board body 50, thereby facilitating plugging and unplugging of the optical connector 90 and the light source module 100.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A light source module, comprising a housing, a light source emission module disposed in the housing, and a first connector and a second connector that are disposed on a same side of the housing, wherein
the first connector and the second connector are separately connected to the light source emission module, the first connector is an optical signal connector, and the second connector is an electrical signal connector; and
both the first connector and the second connector are pluggable connectors.

2. The light source module according to claim 1, wherein the first connector and the second connector are stacked.

3. The light source module according to claim 2, wherein the first connector and the second connector are disposed side by side.

4. The light source module according to claim 2 or 3, wherein the first connector is a multi-channel standard pluggable optical connector or an LC/FC connector.

5. The light source module according to any one of claims 1 to 4, wherein the second connector is a gold finger connector or a plug connector.

6. An optical communications board, comprising a board body and an adapter fastened at an edge of the board body, wherein
the adapter comprises a third connector connected to a first connector in a pluggable manner, and a fourth connector connected to a second connector in a pluggable manner.

7. The optical communications board according to claim 6, wherein the third connector and the fourth connector are disposed side by side.

8. The optical communications board according to claim 6, wherein the third connector and the fourth connector are stacked.

9. The optical communications board according to any one of claims 6 to 8, wherein the third connector and the fourth connector share one housing.

10. The optical communications board according to any one of claims 1 to 9, wherein a positioning post is disposed on the housing, and a corresponding positioning hole is disposed on the board body.

11. An optical communications system, comprising the light source module according to any one of claims 1 to 5 and the optical communications board according to any one of claims 6 to 10, wherein
the light source module is connected to the optical communications board in a pluggable manner.
